# FASCICULE DE BREVET EUROPEEN

(11) **EP 3 524 457 B1**
(45) Date de publication et mention de la délivrance du brevet: **27.01.2021**
(21) Numéro de dépôt: 19156279.2
(22) Date de dépôt: 08.02.2019
(51) Int. Cl.: B60J 7/06, B60J 7/08

(54) **CAMION A BENNE BASCULANTE ET DISPOSITIF DE BACHAGE EQUIPANT UN TEL CAMION**
LASTKRAFTWAGEN MIT KIPPERAUFBAU, UND ABDECKVORRICHTUNG, MIT DER EIN SOLCHER LKW AUSGERÜSTET IST
DUMPER TRUCK AND SHEETING DEVICE FITTED ON SUCH A TRUCK

(30) Priorité: 13.02.2018 FR 1851192
(43) Date de publication de la demande: 14.08.2019
(73) Titulaire: Charier, 44550 Montoir de Bretagne (FR)
(72) Inventeur: BAERST, Bruno, 44118 LA CHEVROLIERE (FR)
(74) Mandataire: Ipsilon

(56) Documents cités:
- WO-A1-98/05527
- FR-A1- 2 892 987
- FR-A1- 2 916 172

## Description

### DOMAINE DE L'INVENTION

L'invention concerne un camion à benne basculante, et un dispositif de bâchage équipant un tel camion.

Elle concerne plus particulièrement un camion comprenant une cabine, une benne basculante ouverte par le dessus, des moyens d'entraînement en déplacement à basculement de la benne, un dispositif de bâchage du dessus de la benne et un châssis porteur de la cabine et de la benne disposées, à l'état porté par le châssis, dans le prolongement l'une de l'autre depuis l'avant en direction de l'arrière du camion, le dispositif de bâchage comprenant une bâche et un carter de bâche, ladite bâche étant une bâche déployable, de préférence par coulissement, pour le passage de la bâche d'une position pliée de stockage, dans laquelle elle est logée au moins partiellement à l'intérieur du carter, à une position déployée de travail, dans laquelle elle est apte à venir à recouvrement au moins partiel du dessus de la benne.

### ART ANTÉRIEUR

Les camions à benne basculante équipés d'un dispositif de bâchage pour permettre, à l'aide de la benne, la fermeture du dessus de la benne sont connus comme l'illustre le brevet FR-2.892.987.

Jusqu'à présent, le carter et la bâche associée sont montés de manière permanente sur la benne. Il en résulte un endommagement fréquent du dispositif de bâchage, notamment en position levée de la benne, les risques d'accrochage du dispositif de bâchage avec un obstacle étant élevés.

Le brevet FR-2.892.987 illustre une solution où la bâche et le carter de la bâche peuvent permettre un déplacement en basculement de la benne indépendamment du carter et de la bâche associée.

### BUTS ET RÉSUMÉ

Un but de l'invention est de proposer un camion à benne basculante dont la conception permet de réduire les risques d'endommagement du dispositif de bâchage.

Un autre but de l'invention est de proposer un dispositif de bâchage dont la conception permet une intégration aisée sur un camion à benne basculante, tout en limitant les risques d'endommagement du dispositif de bâchage.

À cet effet, l'invention a pour objet un camion comprenant une cabine, une benne basculante ouverte par le dessus, des moyens d'entraînement en déplacement à basculement de la benne, un dispositif de bâchage du dessus de la benne et un châssis porteur de la cabine et de la benne disposées, à l'état porté par le châssis dans le prolongement l'une de l'autre depuis l'avant en direction de l'arrière du camion, le dispositif de bâchage comprenant une bâche et un carter de bâche, ladite bâche étant une bâche déployable, de préférence par coulissement, pour le passage de la bâche d'une position pliée de stockage, dans laquelle elle est logée au moins partiellement à l'intérieur du carter, à une position déployée de travail, dans laquelle elle est apte à venir à recouvrement au moins partiel du dessus de la benne, le carter de bâche et la bâche associée étant montés mobiles entre deux positions, l'une, dite inactive, dans laquelle le carter et la bâche associée sont portés par le châssis et désaccouplés de la benne pour permettre un déplacement en basculement de la benne indépendamment du carter et de la bâche associée, l'autre, dite active, dans laquelle le carter est couplé à la benne, caractérisé en ce que le carter est, dans la position active dans laquelle il est couplé à la benne, monté solidaire en déplacement à basculement de la benne.

Grâce au fait que le carter et la bâche associée sont montés par déplacement suivant une direction parallèle à l'axe longitudinal du camion, mobiles entre une position active et une position inactive, il est possible de désaccoupler le carter et la bâche associée de la benne.

La possibilité de désaccoupler le carter et la bâche associée de la benne permet d'entraîner en déplacement à basculement la benne sans entraîner en déplacement le carter et la bâche associée, qui demeurent ainsi sur le châssis en position basse par rapport à l'extrémité avant de la benne, en position basculée de la benne.

En position active du carter et de la bâche associée, le carter est couplé à la benne et la bâche est déployable depuis le carter, pour venir à recouvrement au moins partiel du dessus de la benne. Ainsi, en position active du carter et de la bâche associée, la bâche peut être en position pliée ou déployée.

En position active, le carter qui est couplé à la benne peut être couplé au châssis ou non, selon que le conducteur souhaite pouvoir, ou non, basculer la benne.

Selon un mode de réalisation de l'invention, le camion comprend des moyens d'entraînement en déplacement du carter de la position active, ou respectivement inactive, vers la position inactive, ou respectivement active, et des moyens de rappel du carter en position active, ou respectivement inactive, lesdits moyens de rappel étant actifs à l'encontre des moyens d'entraînement en déplacement. Le conducteur de camion peut ainsi, selon l'environnement, décider d'un positionnement du carter et de la bâche associée variable par rapport à la benne.

Selon un mode de réalisation de l'invention, le carter est, pour son déplacement entre les positions active et inactive, monté, par rapport au châssis, mobile à coulissement suivant une direction parallèle à l'axe longitudinal du camion.

Selon un mode de réalisation de l'invention, le carter est, pour son déplacement entre les positions active et inactive, couplé au châssis au moins via un support coulissant auquel le carter est couplable de manière désaccouplable, ce support coulissant étant monté, par rapport au châssis, mobile à coulissement suivant une direction parallèle à l'axe longitudinal du camion.

Selon un mode de réalisation de l'invention, le camion comprend des moyens déverrouillables de verrouillage du support coulissant par rapport au châssis et des moyens déverrouillables de verrouillage du carter à la benne.

Selon un mode de réalisation de l'invention, le camion comprend des moyens de détection du support coulissant dans une position représentative d'une position dans laquelle, à l'état porté du carter par le support coulissant, le carter est disposé en dehors de la trajectoire suivie par la benne lors de son basculement et les moyens d'entraînement en déplacement à basculement de la benne comprennent une unité de pilotage configurée pour empêcher le basculement de la benne à l'état non détecté du support coulissant par les moyens de détection. Il en résulte l'impossibilité de commander le basculement de la benne dans le sens d'un levage de la benne, lorsque le support coulissant n'est pas en dehors de la trajectoire suivie par la benne lors de son basculement, c'est-à-dire n'est pas dans la position correspondant à la position qu'il occupe en position inactive du carter. On évite ainsi, d'une part, tout endommagement du support coulissant à l'état couplé du carter à la benne en position active du carter, d'autre part tout endommagement du carter à l'état désaccouplé à la benne.

Selon un mode de réalisation de l'invention, le camion comprend des moyens de couplage du support au châssis configurés pour permettre un couplage de manière mobile à coulissement du support dit coulissant par rapport audit châssis.

De préférence, les moyens de couplage du support coulissant au châssis comprennent un support, dit stationnaire, sur lequel le support coulissant est apte à être monté mobile à coulissement, le support stationnaire étant apte à être fixé de manière stationnaire au châssis du camion.

De préférence, le support coulissant est, à l'état monté mobile à coulissement sur le support stationnaire, déplaçable entre une position dite rapprochée du support stationnaire, dans laquelle il s'étend à recouvrement au moins partiel du support stationnaire, et une position dite écartée du support stationnaire, dans laquelle il s'étend en porte à faux par rapport au support stationnaire, et en ce que ledit support coulissant est équipé de moyens déverrouillables de verrouillage au support stationnaire dans la position rapprochée du support stationnaire.

Selon un mode de réalisation, le camion comprend des moyens d'entraînement en déplacement du support coulissant de la position rapprochée, ou respectivement écartée, du support stationnaire vers la position écartée, ou respectivement rapprochée, du support stationnaire et des moyens de rappel du support coulissant en position rapprochée, ou respectivement écartée, du support stationnaire, lesdits moyens de rappel étant actifs à l'encontre des moyens d'entraînement en déplacement.

De préférence, les moyens d'entraînement en déplacement du support coulissant entre les positions rapprochée et écartée du support stationnaire comprennent un treuil porté par le support stationnaire et équipé d'un câble couplable au support coulissant, et en ce que les moyens de rappel des supports coulissant et stationnaire en position rapprochée ou écartée l'un de l'autre comprennent au moins un vérin à gaz ou un organe élastiquement déformable disposé entre lesdits supports.

Selon un mode de réalisation, le camion comprend des moyens de détection du support coulissant en position rapprochée du support stationnaire.

Selon un mode de réalisation de l'invention, le carter de bâche affecte la forme d'un C ouvert en direction de l'extrémité arrière du camion.

L'invention a encore pour objet un dispositif de bâchage d'une benne basculante d'un camion à benne basculante, pour l'obtention d'un camion du type précité, le dispositif de bâchage comprenant une bâche et un carter de bâche, ladite bâche étant une bâche déployable de préférence par coulissement pour le passage de la bâche d'une position pliée de stockage dans laquelle elle est logée au moins partiellement à l'intérieur du carter à une position déployée de travail dans laquelle elle est apte à venir à recouvrement au moins partiel du dessus de la benne, caractérisé en ce que le dispositif de bâchage comprend un support auquel le carter est couplable de manière désaccouplable, et des moyens de couplage du support au châssis, lesdits moyens de couplage étant configurés pour permettre un couplage de manière mobile à coulissement du support, dit coulissant, par rapport audit châssis.

Ce couplage de manière mobile à coulissement du support coulissant par rapport au châssis permet le passage du carter et de la bâche associée d'une position inactive, dans laquelle le carter et la bâche associée sont aptes à être portés par le châssis et désaccouplés de la benne pour permettre un déplacement en basculement de la benne, indépendamment du carter et de la bâche associée, à une position active dans laquelle le carter est apte à être couplé à la benne.

Selon un mode de réalisation du dispositif de bâchage, les moyens de couplage du support coulissant au châssis comprennent un support dit stationnaire sur lequel le support coulissant est apte à être monté mobile à coulissement, le support stationnaire étant apte à être fixé de manière stationnaire au châssis du camion.

Selon un mode de réalisation du dispositif de bâchage, le support coulissant est, à l'état monté mobile à coulissement sur le support stationnaire, déplaçable entre une position dite rapprochée du support stationnaire, dans laquelle il s'étend à recouvrement au moins partiel du support stationnaire, et une position dite écartée du support stationnaire, dans laquelle il s'étend en porte-à-faux par rapport au support stationnaire, et ledit support coulissant est équipé de moyens déverrouillables de verrouillage au support stationnaire dans la position rapprochée du support stationnaire.

Selon un mode de réalisation, le dispositif de bâchage comprend des moyens d'entraînement en déplacement du support coulissant de la position rapprochée ou respectivement écartée du support stationnaire vers la position écartée ou respectivement rapprochée du support stationnaire et des moyens de rappel du support coulissant en position rapprochée ou respectivement écartée du support stationnaire, lesdits moyens de rappel étant actifs à l'encontre des moyens d'entraînement en déplacement.

Selon un mode de réalisation du dispositif de bâchage, les moyens d'entraînement en déplacement du support coulissant entre les positions rapprochée et écartée du support stationnaire comprennent un treuil porté par le support stationnaire et équipé d'un câble couplable au support coulissant et les moyens de rappel des supports coulissant et stationnaire en position rapprochée ou écartée l'un de l'autre comprennent au moins un vérin à gaz ou un organe élastiquement déformable disposé entre lesdits supports.

Selon un mode de réalisation, le dispositif de bâchage comprend des moyens de détection du support coulissant en position rapprochée du support stationnaire. Il en résulte la possibilité d'éviter un basculement de la benne dans le sens du levage, qui serait susceptible d'endommager le support coulissant.

### BRÈVE DESCRIPTION DES DESSINS

L'invention sera bien comprise à la lecture de la description suivante d'exemples de réalisation, en référence aux dessins annexés dans lesquels :
- La figure 1 représente une vue schématique d'un camion à benne basculante conforme à l'invention, en position inactive du carter et de la bâche associée.
- La figure 2 représente une vue schématique d'un camion à benne basculante conforme à l'invention, en position active du carter et de la bâche associée, en position non basculée de la benne, à l'état non déployé de la bâche et à l'état couplé du carter et du support coulissant.
- La figure 3 représente une vue schématique d'un camion à benne basculante conforme à l'invention, en position active du carter et de la bâche associée, en position non basculée de la benne, à l'état déployé de la bâche et à l'état désaccouplé du carter et du support coulissant.
- La figure 4 représente une vue schématique d'un camion à benne basculante conforme à l'invention, en position active du carter et de la bâche associée, en position basculée de la benne, à l'état déployé de la bâche et à l'état désaccouplé du carter et du support coulissant.

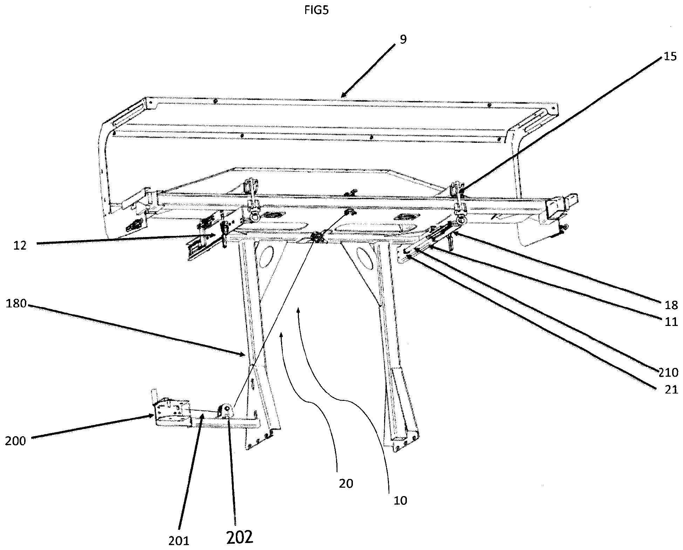

- La figure 5 représente une vue simplifiée en perspective d'un dispositif de bâchage conforme à l'invention, la bâche ayant été omise.

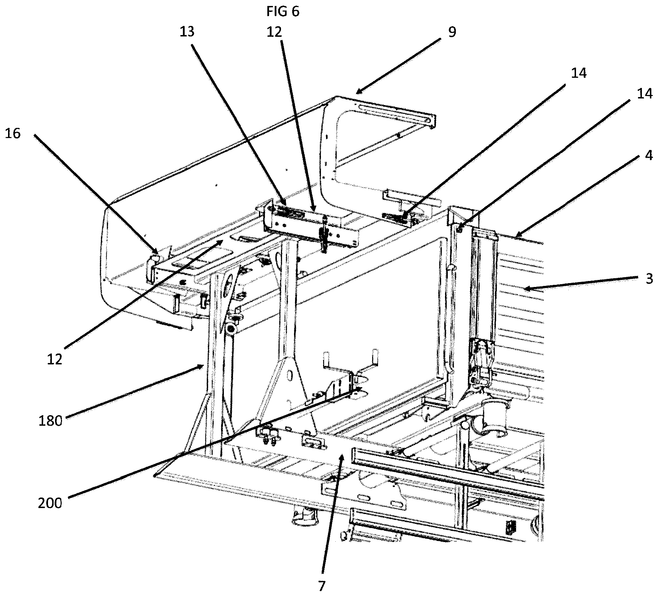

- La figure 6 représente une vue partielle en perspective d'un camion, en position inactive du carter, prise depuis l'avant du camion.

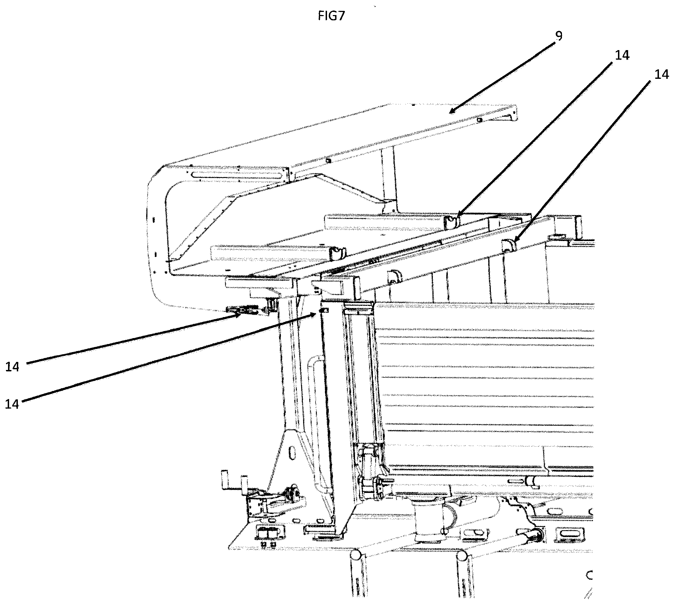

- La figure 7 représente une vue partielle en perspective d'un camion, en position inactive du carter, prise depuis l'extrémité arrière de la benne.
- La figure 8 représente une vue partielle en perspective d'un camion, en position active du carter, prise depuis l'avant du camion.
- La figure 9 représente une vue partielle en perspective d'un camion, en position active du carter, prise depuis l'extrémité arrière de la benne.

### DESCRIPTION DÉTAILLÉE

Comme mentionné ci-dessus, l'invention a pour objet un dispositif 6 de bâchage d'un camion à benne basculante et un camion 1 à benne basculante équipé d'un tel dispositif 6 de bâchage.

Ce camion 1 comprend donc une benne 3 basculante à face du dessus ouverte, montée sur un châssis 7 roulant porteur.

Le camion 1 comprend encore une cabine 2 disposée à l'avant du châssis 7 roulant, de sorte que la cabine 2 et la benne 3 sont disposées dans le prolongement l'une de l'autre, c'est-à-dire l'une derrière l'autre depuis l'avant en direction de l'arrière du camion 1, le long de l'axe longitudinal du camion 1.

Le camion 1 comprend encore des moyens 5 d'entraînement en déplacement à basculement de la benne 3 pour le passage de la benne 3 basculante d'une position non basculée dans laquelle le fond de la benne est sensiblement horizontal, c'est-à-dire s'étend sensiblement parallèlement au plan d'appui au sol passant par les roues du châssis 7 porteur, à une position basculée dans laquelle l'extrémité avant de la benne s'étend à un niveau supérieur par rapport à l'extrémité arrière de la benne 3, et le fond de la benne est incliné à pente descendante, depuis l'extrémité avant vers l'extrémité arrière de la benne, pour un vidage par gravité du contenu de la benne.

Ces moyens 5 d'entraînement à basculement sont bien connus à ceux versés dans cet art, et peuvent par exemple être formés d'au moins un vérin disposé entre le châssis 7 porteur et le fond de la benne, cette benne étant par ailleurs couplée à pivotement au châssis 7 porteur. L'axe pivot de la liaison s'étend transversalement à l'axe longitudinal du camion.

Ce camion 1 comprend encore un dispositif 6 de bâchage du dessus de la benne 3. Ce dispositif 6 de bâchage comprend une bâche 8 et un carter 9 de bâche. La bâche 8 est une bâche déployable par coulissement, pour le passage de la bâche 8 d'une position pliée de stockage dans laquelle elle est logée au moins partiellement à l'intérieur du carter 9, à une position déployée de travail dans laquelle elle est apte à venir à recouvrement au moins partiel du dessus de la benne 3.

Dans l'exemple représenté, le carter 9 de bâche affecte la forme d'un C ouvert en direction de l'extrémité arrière du camion. La bâche 8 est pliée en accordéon à l'intérieur du carter 9 en position repliée. Des moyens 19 de guidage de la bâche, tels que des câbles, sont positionnables le long des bords de l'ouverture 4 formée par la face du dessus ouverte de la benne 3, pour permettre un guidage de la bâche lors de son déplacement suivant une direction parallèle à l'axe longitudinal du camion. Un moteur peut permettre un déploiement automatique de la bâche. Ce déploiement peut également être manuel.

La conception des câbles et leur positionnement sont classiques pour une benne basculante. Ces câbles sont ici positionnables de manière amovible sur la benne.

Lorsque la bâche 8 est en position repliée, les moyens 19 de guidage peuvent également être désolidarisés de la benne et logés à l'intérieur du carter 9, avec les moyens de motorisation du déploiement de la bâche lorsque ces derniers sont présents.

De manière caractéristique à l'invention, le carter 9 de bâche et la bâche 8 associée sont montés mobiles entre deux positions, l'une dite inactive dans laquelle le carter 9 et la bâche 8 associée sont portés par le châssis 7 et désaccouplés de la benne 3 pour permettre un déplacement en basculement de la benne 3, indépendamment du carter 9 et de la bâche associée, l'autre dite active, dans laquelle le carter 9 est couplé à la benne 3 et monté solidaire en déplacement à basculement de la benne 3.

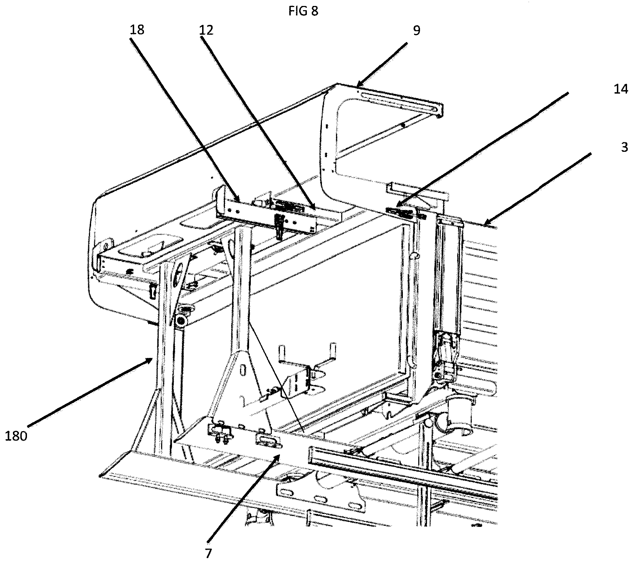

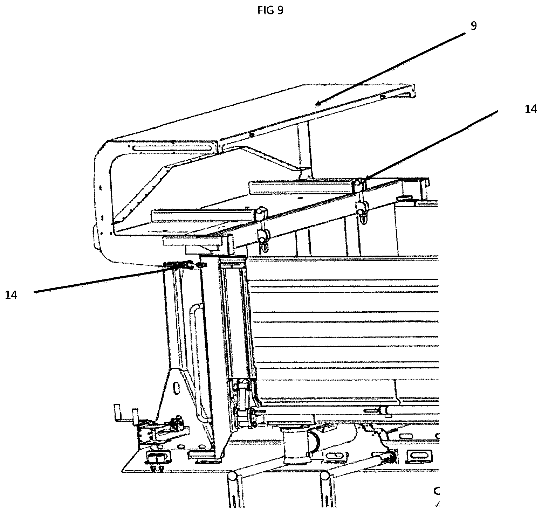

En position active dans laquelle le carter 9 est couplé à la benne 3, la bâche 8 peut être en position pliée ou déployée. Dans cette position active, le carter 9 est disposé au sommet de l'extrémité avant de la benne, et repose sur ladite benne à laquelle il est couplé par des moyens 14 de verrouillage, comme illustré aux figures 8 et 9.

Ces moyens 14 de verrouillage du carter 9 à la benne 3, en position active du carter 9, peuvent comprendre des organes de verrouillage disposés entre le carter 9 et l'extérieur de la benne 3 et des organes de verrouillage disposés entre le carter 9 et l'intérieur de la benne 3.

Dans les exemples représentés, les organes de verrouillage disposés entre le carter 9 et l'extérieur de la benne 3 sont disposés aux extrémités du profilé en C formé par le carter 9. Chaque organe de verrouillage est formé d'une genouillère qui vient en prise avec une partie complémentaire disposée sur la face externe d'une paroi longitudinale du camion.

Les organes de verrouillage disposés entre le carter 9 et l'intérieur de la benne sont formés par des crochets disposés à l'intérieur du profil en C formant le carter, sur la branche inférieure du C, ces crochets étant aptes à être reliés à des crochets disposés à l'intérieur de la benne, le long de la paroi transversale avant de la benne, par des organes de liaison, tels que des genouillères.

Ainsi, le carter repose par la branche inférieure du C, sur le dessus de la benne, au niveau de l'extrémité avant de la benne.

La bâche 8 peut indifféremment être pliée dans le carter 9 ou déployée pour venir couvrir au moins partiellement la face du dessus de la benne. On note que dans cette position active du carter 9 dans laquelle le carter 9 est couplé à la benne 3, ce carter 9 est monté solidaire en déplacement à basculement de la benne 3.

Le carter 9 est déplaçable de la position active à la position inactive. À cet effet, le camion comprend des moyens 10 d'entraînement en déplacement du carter 9 de la position active, ou respectivement inactive, vers la position inactive, ou respectivement active, et des moyens 11 de rappel du carter 9 en position active, ou respectivement inactive, lesdits moyens 11 de rappel étant actifs à l'encontre des moyens 10 d'entraînement en déplacement. Le détail de ces moyens d'entraînement et de ces moyens de rappel sera fourni ci-après.

Le carter 9 est donc ainsi, pour son déplacement entre les positions active et inactive, monté, par rapport au châssis 7, mobile à coulissement, suivant une direction parallèle à l'axe longitudinal du camion. En particulier, le carter 9 est, pour son déplacement entre les positions active et inactive, couplé au châssis 7 au moins via un support 12 coulissant auquel le carter est couplable de manière désaccouplable, ce support 12 coulissant étant monté par rapport au châssis 7 mobile à coulissement suivant une direction parallèle à l'axe longitudinal du camion 1. En particulier, le dispositif de bâchage du camion comprend des moyens 18 de couplage du support 12 coulissant au châssis 7, lesdits moyens 18 de couplage étant configurés pour permettre un couplage de manière mobile à coulissement du support 12 coulissant par rapport au châssis 7.

Ces moyens 18 de couplage et le support 12 coulissant font partie, avec le carter 9 et la bâche 8, du dispositif 6 de bâchage.

Ces moyens 18 de couplage peuvent affecter un grand nombre de formes.

Dans les exemples représentés, ces moyens 18 de couplage, qui sont configurés pour permettre un couplage de manière mobile à coulissement du support 12 coulissant par rapport au châssis 7 comprennent un support 180 stationnaire, sur lequel le support 12 coulissant est apte à être monté mobile à coulissement. Ce support 180 stationnaire est apte à être fixé de manière stationnaire au châssis 7 du camion 1.

Ce support 180 stationnaire est disposé sur le châssis 7 porteur, entre la cabine et la benne. Ce support 180 stationnaire est formé, dans l'exemple représenté, de deux montants, reliés entre eux par une traverse, et équipés chacun, à leur extrémité supérieure, d'un rail s'étendant parallèlement à l'axe longitudinal du camion, qui correspond également à direction de déploiement de la bâche.

Le support 12 coulissant se présente quant à lui sous forme d'un plateau équipé de rails, qui coopèrent avec les rails du support 180 stationnaire, pour former une glissière. Ainsi, le support 12 coulissant coulisse à la manière d'un tiroir, le long des rails du support 180 stationnaire. Le support 12 coulissant peut être équipé, le long de son bord avant pris par rapport à la direction avant/arrière du camion, de plots de centrage aptes à s'insérer dans des orifices complémentaires ménagés dans le support 180 stationnaire en position rapprochée du support 12 coulissant du support 180 stationnaire.

En effet, le support 12 coulissant est, à l'état monté mobile à coulissement sur le support 180 stationnaire déplaçable entre une position rapprochée du support 180 stationnaire dans laquelle il s'étend à recouvrement du support 180 stationnaire, et une position dite écartée du support 180 stationnaire dans laquelle il s'étend en porte-à-faux par rapport au support 180 stationnaire.

Ce support 12 coulissant est équipé de moyens 13 déverrouillables de verrouillage au support 180 stationnaire, dans la position rapprochée du support 180 stationnaire. Ces moyens 13 déverrouillables de verrouillage sont ici formés par des genouillères disposées entre lesdits supports.

La position du support 12 coulissant rapprochée du support 180 stationnaire correspond à la position apte à être occupée par le support 12 coulissant en position inactive du carter, à l'état désaccouplé du carter de la benne ou en position active du carter, à l'état désaccouplé du support coulissant du carter.

La position du support 12 coulissant écarté du support 180 stationnaire correspond à la position apte à être occupée par le support 12 coulissant en position active du carter, à l'état couplé du carter à la benne et couplé du carter au support 12 coulissant.

Pour permettre le passage du support 12 coulissant monté mobile à coulissement suivant une direction parallèle à l'axe longitudinal du camion d'une position à une autre par rapport au support 180 stationnaire, le dispositif de bâchage comprend des moyens 20 d'entraînement en déplacement du support 12 coulissant de la position rapprochée, ou respectivement écartée, du support 180 stationnaire vers la position écartée, ou respectivement rapprochée, du support 180 stationnaire, et des moyens 21 de rappel du support 12 coulissant en position rapprochée, ou respectivement écartée, du support 180 stationnaire, lesdits moyens 21 de rappel étant actifs à l'encontre des moyens 20 d'entraînement en déplacement.

À l'état couplé du carter 9 au support 12 coulissant, les moyens 20 d'entraînement en déplacement du support 12 coulissant de la position rapprochée, ou respectivement écartée, du support stationnaire vers la position écartée, ou respectivement rapprochée, du support stationnaire correspondent aux moyens d'entraînement en déplacement du carter 9 de la position active, ou respectivement inactive, vers la position inactive, ou respectivement active.

De même, les moyens 21 de rappel du support 12 coulissant en position rapprochée, ou respectivement écartée, du support 180 stationnaire correspondent aux moyens 11 de rappel du carter 9 en position active, ou respectivement inactive.

Dans les exemples représentés, les moyens 20 d'entraînement en déplacement du support 12 coulissant sont des moyens 20 d'entraînement en déplacement du support 12 coulissant depuis la position écartée du support 180 stationnaire vers la position rapprochée du support 180 stationnaire, tandis que les moyens 21 de rappel sont des moyens de rappel du support 12 coulissant en position écartée du support 180 stationnaire.

Dans les exemples représentés, les moyens 20 d'entraînement en déplacement du support 12 coulissant en position rapprochée du support 180 stationnaire comprennent un treuil 200 porté par le support 180 stationnaire et équipé d'un câble 201 couplable au support 12 coulissant, et les moyens 21 de rappel des supports coulissant 12 et stationnaire 180 en position écartée l'un de l'autre comprennent au moins un vérin 210 à gaz disposé entre lesdits supports. En l'occurrence, dans les exemples représentés, il est prévu deux vérins à gaz disposés chacun au niveau d'un rail du support 180 stationnaire.

Le câble du treuil passe quant à lui à travers au moins une poulie 202 disposée sur le support 180 stationnaire, avant d'être accroché par son extrémité libre au support 12 coulissant. L'enroulement du câble autour du tambour du treuil permet ainsi d'entraîner le support coulissant dans le sens d'un rapprochement du support stationnaire à l'encontre des vérins à gaz qui tendent à rappeler le support coulissant en position écartée du support stationnaire.

Il doit être noté que ces vérins à gaz auraient pu être remplacés par des ressorts ou des organes élastiquement déformables, tels que des blocs caoutchouc, sans sortir du cadre de l'invention.

Le carter 9 est, pour son déplacement entre les positions active et inactive, couplé au châssis 7 via le support 12 coulissant auquel le carter 9 est couplable de manière désaccouplable par l'intermédiaire d'organes 15 de verrouillage disposés entre le carter 9 et le support 12 coulissant.

Ces organes 15 de verrouillage sont ici formés de tiges qui traversent la branche inférieure du C du carter 9 avant de traverser le plateau constitutif du support 12 coulissant et d'être maintenues dans cette position par un écrou.

Le conducteur du camion peut ainsi, à volonté, coupler ou désaccoupler le carter 9 du support 12 coulissant.

Le camion, et en particulier le dispositif de bâchage comprend encore des moyens 16 de détection du support 12 coulissant dans une position représentative d'une position dans laquelle, à l'état porté du carter 9 par le support 12 coulissant, le carter 9 est disposé en dehors de la trajectoire suivie par la benne 3 lors de son basculement.

En d'autres termes, le dispositif de bâchage du camion comprend des moyens 16 de détection du support 12 coulissant en position rapprochée du support 180 stationnaire. Ces moyens 16 de détection peuvent être formés par un capteur de position tel qu'un contacteur, disposé sur le support 180 stationnaire, ce capteur de position détectant la position rapprochée du support coulissant du support stationnaire.

Les moyens 5 d'entraînement en basculement de la benne comprennent une unité 17 de pilotage configurée pour empêcher le basculement de la benne 3 à l'état non-détecté du support 12 coulissant par les moyens 16 de détection. Cette unité 17 de pilotage peut comprendre une mémoire de stockage des informations fournies par le capteur de position et un module de traitement de ces informations pour autoriser l'émission d'un signal de commande du vérin de levage de la benne des moyens 5 d'entraînement en basculement de la benne uniquement lorsque le capteur de position détecte que le support coulissant est en position rapprochée du support stationnaire, ce qui signifie qu'il n'est pas resté couplé au carter, si le carter est en position active et couplé à la benne.

En pratique, le passage de la position inactive du carter à la position active du carter s'opère comme suit : le carter 9 est couplé au support 12 coulissant et repose sur ce dernier. Le support 12 coulissant est en position rapprochée du support 180 stationnaire, c'est-à-dire en position écartée du bord avant de la benne, de sorte que le carter et le support 12 coulissant sont en dehors de la trajectoire suivie par la benne lors de son basculement par levage. Les moyens de détection de la position du support coulissant détectent cette position du support coulissant, et le basculement de la benne est donc autorisé par l'unité de pilotage. Le conducteur de l'engin actionne le treuil de manière à générer un relâchement du câble de treuil. Les vérins à gaz tendent alors à écarter le support coulissant et le carter de bâche associé du support stationnaire. Quand le support coulissant et le carter de bâche associé arrivent au contact du bord avant de la benne, le carter 9 peut, par ses moyens 14 de verrouillage, être couplé à la benne 3.

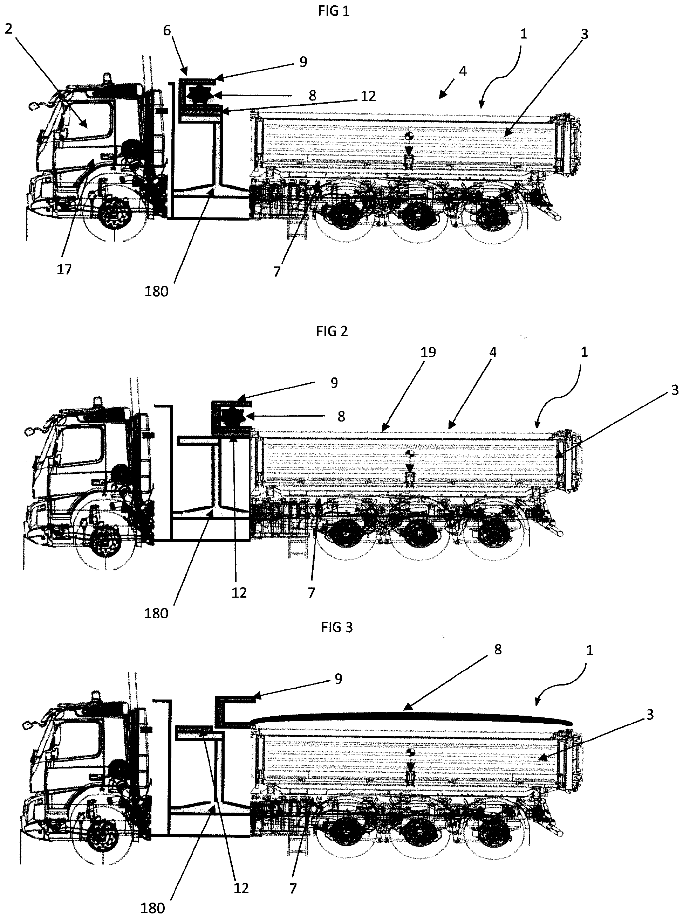

À ce stade, le conducteur du camion procède donc au verrouillage du carter 9 à la benne 3. Dans cette position du carter correspondant à la figure 2, la bâche peut être déployée ou être maintenue pliée. Par contre, le basculement de la benne dans le sens d'un levage de la benne n'est pas autorisé.

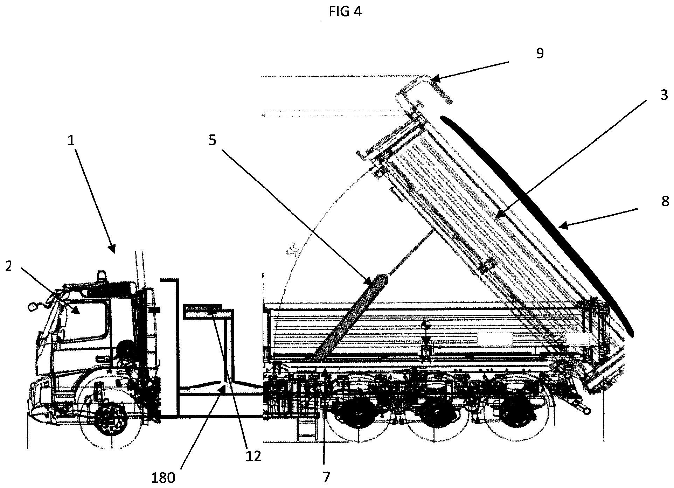

Pour permettre un basculement dans le sens d'un levage de la benne, le support 13 coulissant est désaccouplé du carter 9 et ramené en position rapprochée du support stationnaire par actionnement du treuil à l'encontre des vérins à gaz. Dès que les capteurs de position du support 12 coulissant détectent que le support 12 coulissant est en position rapprochée du support stationnaire, un basculement dans le sens d'un levage de la benne est autorisé. Le conducteur du camion peut alors commander le levage de la benne avec le carter et la bâche embarqués sur la benne, comme illustré à la figure 4.

Pour un retour du carter et de la bâche associée en position inactive, c'est-à-dire en position désaccouplée de la benne, on procède de manière inverse. On amène donc le support 12 coulissant sous une partie du carter 9, on couple le carter 9 et le support 12 coulissant et on déverrouille le carter 9 de la benne, puis à l'aide du treuil, on entraîne en déplacement à coulissement le support 12 coulissant en position rapprochée du support stationnaire, et on le maintien en position rapprochée du support 180 stationnaire à l'aide du treuil et des moyens 13 de verrouillage du support coulissant au support stationnaire.

Il en résulte ainsi la possibilité, pour le conducteur du camion, de choisir, au choix, d'embarquer ou non le carter et la bâche associée du dispositif de bâchage sur la benne, selon les conditions de l'environnement dans lequel la benne doit être entraînée en déplacement à basculement.

## Revendications

1. Camion (1) comprenant une cabine (2), une benne (3) basculante ouverte par le dessus, des moyens (5) d'entraînement en déplacement à basculement de la benne (3), un dispositif (6) de bâchage du dessus de la benne (3) et un châssis (7) porteur de la cabine (2) et de la benne (3) disposées, à l'état porté par le châssis (7) dans le prolongement l'une de l'autre depuis l'avant en direction de l'arrière du camion (1), le dispositif (6) de bâchage comprenant une bâche (8) et un carter (9) de bâche, ladite bâche (8) étant une bâche déployable, de préférence par coulissement, pour le passage de la bâche (8) d'une position pliée de stockage, dans laquelle elle est logée au moins partiellement à l'intérieur du carter (9), à une position déployée de travail, dans laquelle elle est apte à venir à recouvrement au moins partiel du dessus de la benne (3), le carter (9) de bâche et la bâche (8) associée étant montés mobiles entre deux positions, l'une, dite inactive, dans laquelle le carter (9) et la bâche (8) associée sont portés par le châssis (7) et désaccouplés de la benne (3) pour permettre un déplacement en basculement de la benne (3) indépendamment du carter (9) et de la bâche associée, l'autre, dite active, dans laquelle le carter (9) est couplé à la benne (3), **caractérisé en ce que** le carter (9) est, dans la position active dans laquelle il est couplé à la benne (3), monté solidaire en déplacement à basculement de la benne (3).

2. Camion (1) selon la revendication 1, **caractérisé en ce qu'**il comprend des moyens (10) d'entraînement en déplacement du carter (9) de la position active, ou respectivement inactive, vers la position inactive, ou respectivement active, et des moyens (11) de rappel du carter (9) en position active ou respectivement inactive, lesdits moyens (11) de rappel étant actifs à l'encontre des moyens (10) d'entraînement en déplacement.

3. Camion (1) selon l'une des revendications 1 ou 2, **caractérisé en ce que** le carter (9) est, pour son déplacement entre les positions active et inactive, monté, par rapport au châssis (7), mobile à coulissement suivant une direction parallèle à l'axe longitudinal du camion (2).

4. Camion (1) selon l'une des revendications 1 à 3, **caractérisé en ce que** le carter (9) est, pour son déplacement entre les positions active et inactive, couplé au châssis (7) au moins via un support (12) coulissant auquel le carter (9) est couplable de manière désaccouplable, ce support (12) coulissant étant monté, par rapport au châssis (7), mobile à coulissement suivant une direction parallèle à l'axe longitudinal du camion (1).

5. Camion (1) selon la revendication 4, **caractérisé en ce qu'**il comprend des moyens (13) déverrouillables de verrouillage du support (12) coulissant par rapport au châssis (7) et des moyens (14) déverrouillables de verrouillage du carter (9) à la benne (3).

6. Camion (1) selon l'une des revendications 4 ou 5, **caractérisé en ce qu'**il comprend des moyens (16) de détection du support (12) coulissant dans une position représentative d'une position dans laquelle, à l'état porté du carter (9) par le support (12) coulissant, le carter (9) est disposé en dehors de la trajectoire suivie par la benne (3) lors de son basculement et **en ce que** les moyens (10) d'entraînement en déplacement à basculement de la benne comprennent une unité (17) de pilotage configurée pour empêcher le basculement de la benne (3) à l'état non détecté du support (12) coulissant par les moyens (16) de détection.

7. Camion (1) selon l'une des revendications 1 à 6, **caractérisé en ce que** le carter (9) de bâche affecte la forme d'un C ouvert en direction de l'extrémité arrière du camion (1).

8. Dispositif (6) de bâchage d'une benne (3) basculante d'un camion (1) à benne (3) basculante portée par un châssis (7) porteur, pour l'obtention d'un camion (1) conforme à l'une des revendications 1 à 7, le dispositif (6) de bâchage comprenant une bâche (8) et un carter (9) de bâche, ladite bâche (8) étant une bâche déployable, de préférence par coulissement, pour le passage de la bâche (8) d'une position pliée de stockage dans laquelle elle est logée au moins partiellement à l'intérieur du carter (9), à une position déployée de travail, dans laquelle elle est apte à venir à recouvrement au moins partiel du dessus de la benne (3), **caractérisé en ce que** le dispositif (6) de bâchage comprend un support (12) auquel le carter (9) est couplable de manière désaccouplable, et des moyens (18) de couplage du support (12) au châssis (7), lesdits moyens (18) de couplage étant configurés pour permettre un couplage de manière mobile à coulissement du support (12) dit coulissant par rapport audit châssis (7).

9. Dispositif (6) de bâchage selon la revendication 8, **caractérisé en ce que** les moyens (18) de couplage du support (12) coulissant au châssis (7) comprennent un support (180), dit stationnaire, sur lequel le support (12) coulissant est apte à être monté mobile à coulissement, le support (180) stationnaire étant apte à être fixé de manière stationnaire au châssis (7) du camion (1).

10. Dispositif (6) de bâchage selon la revendication 9, **caractérisé en ce que** le support (12) coulissant est, à l'état monté mobile à coulissement sur le support (180) stationnaire, déplaçable entre une position dite rapprochée du support (180) stationnaire, dans laquelle il s'étend à recouvrement au moins partiel du support (180) stationnaire, et une position dite écartée du support (180) stationnaire, dans laquelle il s'étend en porte à faux par rapport au support (180) stationnaire, et **en ce que** ledit support (12) coulissant est équipé de moyens (13) déverrouillables de verrouillage au support (180) stationnaire dans la position rapprochée du support (180) stationnaire.

11. Dispositif (6) de bâchage selon l'une des revendications 9 ou 10, **caractérisé en ce qu'**il comprend des moyens (20) d'entraînement en déplacement du support (12) coulissant de la position rapprochée, ou respectivement écartée, du support (180) stationnaire vers la position écartée, ou respectivement rapprochée, du support (180) stationnaire et des moyens (21) de rappel du support (12) coulissant en position rapprochée, ou respectivement écartée, du support (180) stationnaire, lesdits moyens (21) de rappel étant actifs à l'encontre des moyens (20) d'entraînement en déplacement.

12. Dispositif (6) de bâchage selon la revendication 11, **caractérisé en ce que** les moyens (20) d'entraînement en déplacement du support (12) coulissant entre les positions rapprochée et écartée du support (180) stationnaire comprennent un treuil (200) porté par le support (180) stationnaire et équipé d'un câble (201) couplable au support (12) coulissant, et **en ce que** les moyens (21) de rappel des supports coulissant (12) et stationnaire (180) en position rapprochée ou écartée l'un de l'autre comprennent au moins un vérin (210) à gaz ou un organe élastiquement déformable disposé entre lesdits supports (12, 180).

13. Dispositif (6) de bâchage selon l'une des revendications 9 à 12, **caractérisé en ce qu'**il comprend des moyens (16) de détection du support (12) coulissant en position rapprochée du support (180) stationnaire.

## Patentansprüche

1. Lastkraftwagen (1), umfassend eine Kabine (2), einen oben offenen Kippbehälteraufbau (3), Mittel (5) zur Antriebs- und Kippverlagerung des Kippbehälters (3), eine Abdeckvorrichtung (6) der Oberseite des Kippbehälters (3) und einen Tragrahmen (7) der Kabine (2) und des Kippbehälters (3), die in dem von dem Rahmen (7) getragenen Zustand in der Verlängerung zueinander von vorn in die hintere Richtung des Lastkraftwagens (1) angeordnet sind, wobei die Abdeckvorrichtung (6) eine Abdeckung (8) und ein Abdeckungsgehäuse (9) umfasst, wobei die Abdeckung (8) eine entfaltbare Abdeckung ist, vorzugsweise durch Gleiten, für den Übergang der Abdeckung (8) aus einer gefalteten Lagerposition, in welcher sie mindestens teilweise im Inneren des Gehäuses (9) untergebracht ist, in eine entfaltete Arbeitsposition, in welcher sie imstande ist, die Oberseite des Kippbehälters (3) mindestens teilweise abzudecken, wobei das Abdeckungsgehäuse (9) und die zugeordnete Abdeckung (8) zwischen zwei Positionen bewegbar angebracht sind, einer als inaktiv bezeichneten Position, in welcher das Gehäuse (9) und die zugeordnete Abdeckung (8) vom Rahmen (7) getragen werden und vom Kippbehälter (3) entkoppelt sind, um eine Kippverlagerung des Kippbehälters (3) unabhängig vom Gehäuse (9) und von der zugeordneten Abdeckung zu gestatten, der anderen, als aktiv bezeichneten, in welcher das Gehäuse (9) an den Kippbehälter (3) gekoppelt ist, **dadurch gekennzeichnet, dass** das Gehäuse (9) in der aktiven Position, in welcher es an den Kippbehälter (3) gekoppelt ist, am Kippbehälter (3) in Kippbewegung fest verbunden angebracht ist.

2. Lastkraftwagen (1) nach Anspruch 1, **dadurch gekennzeichnet, dass** er Verlagerungsantriebsmittel (10) des Gehäuses (9) aus der aktiven oder beziehungsweise inaktiven Position in die inaktive oder beziehungsweise aktive Position umfasst und Rückstellmittel (11) des Gehäuses (9) in aktive oder beziehungsweise inaktive Position, wobei die Rückstellmittel (11) gegen Verlagerungsantriebsmittel (10) aktiv sind.

3. Lastkraftwagen (1) nach einem der Ansprüche 1 oder 2, **dadurch gekennzeichnet, dass** das Gehäuse (9) für seine Verlagerung zwischen der aktiven und inaktiven Position in Bezug auf den Rahmen (7) gemäß einer Richtung, die parallel zur Längsachse des Lastkraftwagens (2) ist, gleitend beweglich angebracht ist.

4. Lastkraftwagen (1) nach einem der Ansprüche 1 bis 3, **dadurch gekennzeichnet, dass** das Gehäuse (9) für seine Verlagerung zwischen der aktiven und inaktiven Position mindestens über einen gleitenden Halter (12) am Rahmen (7) gekoppelt ist, an den das Gehäuse (9) entkoppelbar gekoppelt ist, wobei dieser gleitende Halter (12) in Bezug auf das Gehäuse (7), gemäß einer Richtung, die parallel zur Längsachse des Lastkraftwagens (1) ist, gleitend beweglich angebracht ist.

5. Lastkraftwagen (1) nach Anspruch 4, **dadurch gekennzeichnet, dass** er entriegelbare Mittel (13) zum Verriegeln des gleitenden Halters (12) in Bezug auf den Rahmen (7) und entriegelbare Mittel (14) zum Verriegeln des Gehäuse (9) am Kippbehälter (3) umfasst.

6. Lastkraftwagen (1) nach einem der Ansprüche 4 oder 5, **dadurch gekennzeichnet, dass** er Mittel (16) zum Ermitteln des gleitenden Halters (12) in einer Position umfasst, die für eine Position repräsentativ ist, in welcher, im vom gleitenden Halter (12) getragenen Zustand des Gehäuses (9), das Gehäuse (9) außerhalb des Weges angeordnet ist, der von dem Kippbehälter (3) bei seinem Kippen zurückgelegt wird, und dass die Kippverlagerungsantriebsmittel (10) des Kippbehälters eine Steuereinheit (17) umfassen, die ausgelegt ist, um das Kippen des Kippbehälters (3) im durch die Ermittlungsmittel (16) nicht ermittelten Zustand des gleitenden Halters (12) zu hindern.

7. Lastkraftwagen (1) nach einem der Ansprüche 1 bis 6, **dadurch gekennzeichnet, dass** das Abdeckungsgehäuse (9) die Form eines in Richtung des hinteren Endes des Lastkraftwagens (1) offenen C hat.

8. Abdeckvorrichtung (6) eines Kippbehälters (3) eines Lastkraftwagen (1) mit Kippbehälter (3), der von einem Tragrahmen (7) getragen wird, um einen Lastkraftwagen (1) nach einem der Ansprüche 1 bis 7 zu erhalten, wobei die Abdeckvorrichtung (6) eine Abdeckung (8) und ein Abdeckungsgehäuse (9) umfasst, wobei die Abdeckung (8) eine entfaltbare Abdeckung ist, vorzugsweise durch Gleiten, für den Übergang der Abdeckung (8) aus einer gefalteten Lagerposition, in welcher sie mindestens teilweise im Inneren des Gehäuses (9) untergebracht ist, in eine entfaltete Arbeitsposition, in welcher sie imstande ist, die Oberseite des Kippbehälters (3) mindestens teilweise abzudecken, **dadurch gekennzeichnet, dass** die Abdeckvorrichtung (6) einen Halter (12) umfasst, an den das Gehäuse (9) entkoppelbar gekoppelt ist, und Kopplungsmittel (18) des Halters (12) am Rahmen (7), wobei die Kopplungsmittel (18) ausgelegt sind, um ein gleitend bewegliches Koppeln des gleitenden Halters (12) in Bezug auf den Rahmen (7) zu gestatten.

9. Abdeckvorrichtung (6) nach Anspruch 8, **dadurch gekennzeichnet, dass** die Kopplungsmittel (18) des gleitenden Halters (12) am Rahmen (7) einen stationären Halter (180) umfassen, auf dem der gleitende Halter (12) gleitend beweglich befestigbar ist, wobei der stationäre Halter (180) imstande ist, stationär am Rahmen (7) des Lastkraftwagens (1) befestigt zu sein.

10. Abdeckvorrichtung (6) nach Anspruch 9, **dadurch gekennzeichnet, dass** der gleitende Halter (12) im auf dem stationären Halter (180) gleitend beweglich befestigten Zustand zwischen einer an den stationären Halter (180) angenäherten Position, in weicher er sich in mindestens teilweiser Abdeckung des stationären Halters (180) erstreckt, und einer vom stationären Halter (180) beabstandeten Position, in welcher er sich in Bezug auf den stationären Halter (180) überhängend erstreckt, verlagerbar ist, und dass der gleitende Halter (12) mit entriegelbaren Verriegelungsmitteln (13) am stationären Halter (180) in der an den stationären Halter (180) angenäherten Position ausgestattet ist.

11. Abdeckvorrichtung (6) nach einem der Ansprüche 9 oder 10, **dadurch gekennzeichnet, dass** sie Verlagerungsantriebsmittel (20) des gleitenden Halters (12) aus der an den stationären Halter (180) angenäherten oder beziehungsweise von ihm beabstandeten Position in die von dem stationären Halter (180) beabstandete oder beziehungsweise an ihn angenäherte Position und Rückstellmittel (21) des gleitenden Halters (12) in an den stationären Halter (180) angenäherte oder beziehungsweise von ihm beabstandete Position umfasst, wobei die Rückstellmittel (21) gegen Verlagerungsantriebsmittel (20) aktiv sind.

12. Abdeckvorrichtung (6) nach Anspruch 11, **dadurch gekennzeichnet, dass** die Verlagerungsantriebsmittel (20) des gleitenden Halters (12) zwischen der an den stationären Halter (180) angenäherten und von ihm beabstandeten Position eine Winde (200) umfassen, die von den stationären Halter (180) getragen wird und mit einem Kabel (201) ausgestattet ist, das an den gleitenden Halter (12) koppelbar ist, und dass die Rückstellmittel (21) des gleitenden (12) und stationären (180) Halters in angenäherte oder beabstandete Position voneinander mindestens einen Gaszylinder (210) oder ein elastisch verformbares Organ umfassen, das zwischen den Haltern (12, 180) angeordnet ist.

13. Abdeckvorrichtung (6) nach einem der Ansprüche 9 bis 12, **dadurch gekennzeichnet, dass** sie Mittel (16) zum Ermitteln des gleitenden Halter (12) in an den stationären Halter (180) angenäherter Position umfasst.

## Claims

1. A truck (1) comprising a cab (2), a dump body (3) which is open on top, means (5) for driving the tilting movement of the dump body (3), a sheeting device (6) on top of the dump body (3) and a chassis (7) supporting the cab (2) and the dump body (3) positioned, in the state supported by the chassis (7) in the extension of one another from the front toward the rear of the truck (1), the sheeting device (6) comprising a tarpaulin (8) and a tarpaulin casing (9), said tarpaulin (8) being a deployable tarpaulin, preferably by sliding, for the passage of the tarpaulin (8) from a folded storage position, in which it is housed least partially inside the casing (9), to a deployed working position, in which it is able to at least partially cover the top of the dump body (3), the tarpaulin casing (9) and the associated tarpaulin (8) being mounted movably between two positions, one, called inactive, in which the casing (9) and the associated tarpaulin (8) are supported by the chassis (7) and uncoupled from the dump body (3) to allow a tilting movement of the dump body (3) independently of the casing (9) and the associated dump body, the other, called active, in which the casing (9) is coupled to the dump body (3), **characterized in that** the casing (9) is, in the active position in which it is coupled to the dump body (3), mounted secured in tilting movement with the dump body (3).

2. The truck (1) according to claim 1, **characterized in that** it comprises means (10) for driving the movement of the casing (9) from the active, or respectively inactive, position, toward the inactive, or respectively active, position, and means (11) for returning the casing (9) to the active, or respectively inactive, position, said return means being active against the means (10) for driving in movement.

3. The truck (1) according to one of claims 1 or 2, **characterized in that** the casing (9) is, for its movement between the active and inactive positions, mounted, relative to the chassis (7), to be slidingly movable along a direction which is parallel to the longitudinal axis of the truck (2).

4. The truck (1) according to one of claims 1 to 3, **characterized in that** the casing (9) is, for its movement between the active and inactive positions, coupled to the chassis (7) at least via a sliding support (12) to which the casing (9) can be separably coupled, this sliding support (12) being mounted, relative to the chassis (7), to be movable with sliding along a direction which is parallel to the longitudinal axis of the truck (1).

5. The truck (1) according to claim 4, **characterized in that** it comprises unlockable means (13) for locking the sliding support (12) relative to the chassis (7) and unlockable means (14) for locking the casing (9) to the dump body (3).

6. The truck (1) according to one of claims 4 or 5, **characterized in that** it comprises means (16) for detecting the sliding support (12) in a position representative of a position in which, in the state of the casing (9) supported by the sliding support (12), the casing (9) is positioned outside the trajectory followed by the dump body (3) during tilting thereof and **in that** the means (10) for driving the tilting movement of the dump body comprises a control unit (17) configured to prevent the tilting of the dump body (3) in the undetected state of the sliding support (12) by the detection means (16).

7. The truck (1) according to one of claims 1 to 6, **characterized in that** the tarpaulin casing (9) assumes the form of a C open toward the rear end of the truck (1).

8. A sheeting device (6) of a dump body (3) of a truck (1) with dump body (3) supported by a support chassis (7), in order to obtain a truck (1) according to one of claims 1 to 7, the sheeting device (6) comprising a tarpaulin (8) and a tarpaulin casing (9), said tarpaulin (8) being a deployable tarpaulin, preferably by sliding, for the passage of the tarpaulin (8) from a folded storage position in which it is housed at least partially inside the casing (9), to a deployed working position, in which it is able to at least partially cover the top of the dump body (3), **characterized in that** the sheeting device (6) comprises a support (12) to which the casing (9) can be separably coupled, and means (18) for coupling the support (12) to the chassis (7), said coupling means (18) being configured to allow slidingly movable coupling of the so-called sliding support (12) relative to said chassis (7).

9. The sheeting device (6) according to claim 8, **characterized in that** the means (18) for coupling the sliding support (12) to the chassis (7) comprise a so-called stationary support (180), on which the sliding support (12) is able to be mounted slidingly movably, the stationary support (180) being able to be fixed in a stationary manner to the chassis (7) of the truck (1).

10. The sheeting device (6) according to claim 9, **characterized in that** the sliding support (12) is, in the state mounted slidingly movably on the stationary support (180), movable between a so-called close position to the stationary support (180), in which it extends at least partially covering the stationary support (180), and a so-called separated position from the stationary support (180), in which it extends cantilevered relative to the stationary support (180), and **in that** said sliding support (12) is equipped with unlockable means (13) for locking the stationary support (180) in the closed position of the stationary support (180).

11. The sheeting device (6) according to one of claims 9 or 10, **characterized in that** it comprises means (20) for driving the movement of the sliding support (12) from the close, or respectively separated, position of the stationary support (180) toward the separated, or respectively close, position of the stationary support (180) and means (21) for returning the sliding support (12) to the close, or respectively separated, position of the stationary support (180), said return means (21) being active against the movement driving means (20).

12. The sheeting device (6) according to claim 11, **characterized in that** the means (20) for driving the movement of the sliding support (12) between the close and separated positions with respect to the stationary support (180) comprise a winch (200) supported by the stationary support (180) and equipped with a cable (201) able to be coupled to the sliding support (12), and **in that** the return means (21) of the sliding (12) and stationary (180) supports in the closed or separated position with respect to one another comprise at least one gas cylinder (210) or a resiliently deformable member positioned between said supports (12, 180).

13. The sheeting device (6) according to one of claims 9 to 12, **characterized in that** it comprises means (16) for detecting the sliding support (12) in the position close to the stationary support (180).
